# EUROPEAN PATENT APPLICATION

(11) **EP 2 941 088 A1**
(43) Date of publication of application: **04.11.2015**
(21) Application number: 14305627.3
(22) Date of filing: 28.04.2014
(51) Int. Cl.: H04W 92/08

(54) **Method of managing profiles in a token**

(71) Applicant: Gemalto SA, 92190 Meudon (FR)
(72) Inventor: Faure, Frédéric, 13705 LA CIOTAT (FR); Berard, Xavier, 13705 LA CIOTAT (FR); Dehlinger, Franck, 13705 LA CIOTAT (FR); Borghino, Franck, 13705 LA CIOTAT (FR)

(57) **Abstract**

The invention is a method for managing the swap of current profile in a UICC comprising several profiles connected to a host machine that includes an application and a baseband which includes a radio functions manager. The method comprising the steps of:
- sending a swap command requesting a swap of current profile from the application to the UICC through a first logical channel and
- sending a triggering command from the application to the radio functions manager immediately after sending the swap command, the triggering command forcing sending of a first command by the baseband to the UICC through a second logical channel different from the first logical channel.

## Description

### (Field of the invention)

The present invention relates to methods of managing profiles in a token. It relates particularly to methods of changing the current enabled profile in a token from an application in the host device.

### (Background of the invention)

A secure element is a tamper-resistant physical component able to store data and to provide services in a secure manner. In general, a secure element has a limited amount of memory, a processor with limited capabilities and is devoid of battery. For instance a UICC (Universal Integrated Circuit Card) is a secure element which embeds SIM applications for telecommunication purposes. A secure element can be installed, fixedly or not, in a terminal, like a mobile phone for example. In some cases, the terminals are constituted by machines that communicate with other machines for M2M (Machine to Machine) applications.

A secure element can be in the format of a smart card, or may be in any other format such as for example but not limited to a packaged chip as described in PCT/SE2008/050380, or any other format. A UICC can be used in mobile terminals in GSM, CDMA and UMTS networks for instance. The UICC ensures network authentication, integrity and security of all kinds of personal data. The UICC communicates and cooperates with the baseband (also called baseband processor or baseband radio processor) of the terminal equipment.

It is known to solder or weld the secure element in a host device, in order to get it dependent of this host device. This is done in M2M (Machine to Machine) applications. The same objective is reached when a chip (a secure element) containing a Payment application, SIM or USIM applications and files is contained in the host device. The chip is for example soldered to the mother-board of the host device or machine and constitutes an embedded-secure element (eSE).

A secure element may contain a profile which can include a set of applications, a set of personal data and a set of secret data.

The profile could be linked to a subscription. It may contain network access applications (NAA), payment applications or third party applications providing security for a specific service (e.g. NFC applications).

A physical secure element can emulate several virtual secure elements, each one represented as one profile. In such a case, these profiles are called logical profiles or virtual profiles. An emulated profile is hereinafter called virtual profile. Usually each virtual profile is a software based profile.

A secure element may also be implemented as a pure software component acting as a physical secure element. In this specification, the word token encompasses both a physical secure element and a software component acting as a physical secure element.

The invention concerns a way to manage several virtual profiles which are run one after the other in a single token. Only one virtual profile is active at a time in a device session.

In the state of the art, the basic behaviour to swap a virtual profile to another one is to reset the whole secure element (ex: reset as defined by ISO7816-3 standard for a smart card). After this low-level reset, the Operating System of the secure element enables the newly selected virtual profile. In the swap sequence of the prior art, a proactive Refresh command is sent by the UICC to the baseband of the host device to request a reboot of the baseband.

More precisely, the Refresh command triggers the reboot of a part of the baseband called the radio functions manager RM which is in charge of the management of both the radio functions of the baseband and to the communication with the secure element.

The reboot of the baseband allows taking into account the settings of the newly selected virtual profile in the baseband and to reset the UICC. Then, the baseband needs to perform an authentication with the server of the Mobile Network Operator (MNO) to attach to the network. Due to the master-slave relation between the host device and the secure element, the secure element cannot spontaneously send the Refresh command. The secure element must wait for the receipt of an incoming command on a dedicated logical channel to have the opportunity to send the CAT (Card Application Toolkit) Refresh command in response through this dedicated logical channel. The Refresh command is also named a proactive command.

An application of the terminal can send to the secure element a request for swapping to a new profile. This sending is performed through a logical channel distinct from the dedicated logical channel. On receipt of the swapping request, the secure element cannot send the Refresh command to the baseband due to the difference between the used logical channels. In practice, the secure element waits for a command on the dedicated logical channel to respond by sending the proactive Refresh command. This waiting phase can take a long time during which the swap of profile is not performed.

There is a need to reduce the time requested for activating the newly selected profile in a token.

### (Summary of the Invention)

An object of the invention is to solve the above mentioned technical problem.

The object of the present invention is a method for managing the swap of current virtual profile in a token acting as an UICC. The token comprises a plurality of virtual profiles and is connected to a host machine that comprises an application and a baseband which includes a radio functions manager. The method comprising the steps:
- sending a swap command requesting a swap of current virtual profile from the application to the token through a first logical channel,
- sending a triggering command from the application to the radio functions manager immediately after sending the swap command, the triggering command forcing sending of a first command by the baseband to the token through a second logical channel different from said first logical channel.

Advantageously, the first command may be the STATUS command as defined by ETSI TS 102 221

Advantageously, the triggering command may be an AT+CSIM command or an AT+CRSM command as defined by ESTI TS 127 007 which contains a STATUS command as defined by ETSI TS 102 221.

Advantageously, the triggering command may be an AT+CGLA command or an AT+CRLA command as defined by ESTI TS 127 007 which contains a STATUS command as defined by ETSI TS 102 221.

Advantageously, the token may register a request for profile swap in response to receiving the swap command and the token may send a CAT REFRESH command through said second logical channel in response to receiving the first command only if a request for profile swap is currently registered.

Another object of the invention is a terminal equipment comprising an application and a baseband which includes a radio functions manager. The terminal equipment is configured to connect a token which acts as an UICC and which comprises a plurality of virtual profiles. The application is able to send a swap command requesting a swap of current virtual profile to the token through a first logical channel. The application is configured to send a triggering command to the radio functions manager immediately after sending the swap command. The triggering command forces the sending of a first command by the baseband to the token through a second logical channel different from the first logical channel.

Advantageously, the first command may be the STATUS command as defined by TS 102 221.

Advantageously, the triggering command may be an AT+CSIM command or an AT+CRSM command as defined by ESTI TS 127 007 which contains a STATUS command as defined by ETSI TS 102 221.

Advantageously, the triggering command (TC) may be an AT+CGLA command or an AT+CRLA command as defined by as defined by ESTI TS 127 007 which contains a STATUS command as defined by ETSI TS 102 221.

Another object of the invention is a system comprising a terminal equipment according to the invention and an token including an operating system configured to register a request for profile swap in response to receiving the swap command. The operating system is configured to send a CAT REFRESH command through the second logical channel in response to receiving the first command only if a request for profile swap is currently registered.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of message exchange between a host device and a token according to the prior art;
- Figure 2 depicts an example of message exchange between a host device and a token according to the invention; and
- Figure 3 is an example of a system comprising a host device and a token according to the invention.

### (Detailed description of the preferred embodiments)

The invention may apply to any types of token intended to contain several virtual profiles. For example the token may be a smart card, an UICC, an embedded-UICC, an embedded-SIM, a software UICC or a software eUICC.

The token may be coupled to any type of host machine having a baseband and able to establish a communication session with the token. For example the host machine may be a mobile phone, tablet PC, a vehicle, a meter, a slot machine, a TV or a computer.

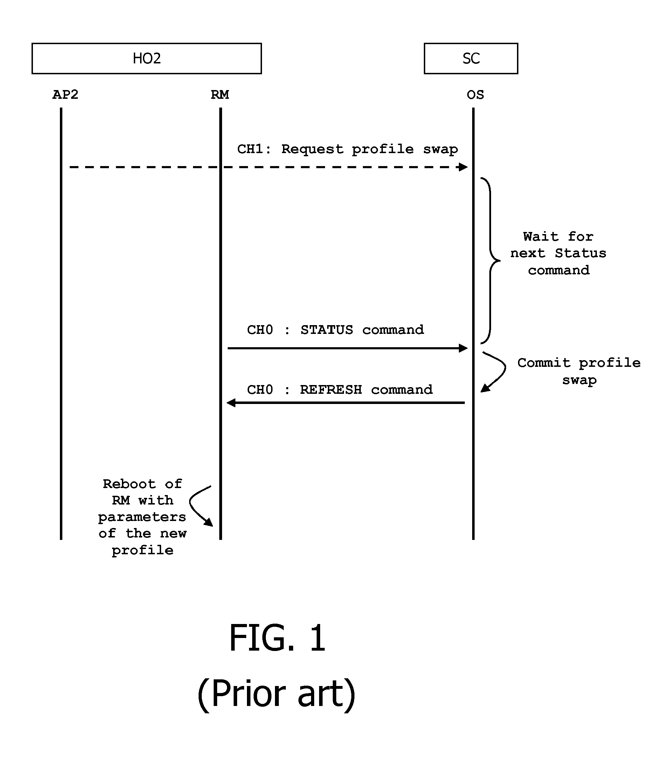

By way of illustration, **Figure 1** shows the sequence allowing to swap the current virtual profile in a token SC according to the prior art.

The token SC is an embedded UICC which is connected to a host device HO2 which includes a software application AP2 and a baseband. The baseband comprises a radio functions manager RM. First the software application AP2 sends a request for swap of profile to the token SC via a logical channel number CH1. The token sets a flag to the newly selected profile and waits for a further command received through the logical channel number CH0.

After a while, the radio functions manager RM sends a Status command via the logical channel number CH0. In response, the token SC commits the profile swap and sends a proactive Refresh command through the logical channel number CH0. At receipt of the Refresh command, the radio functions manager RM reboots by taking into account parameters corresponding to the newly selected profile.

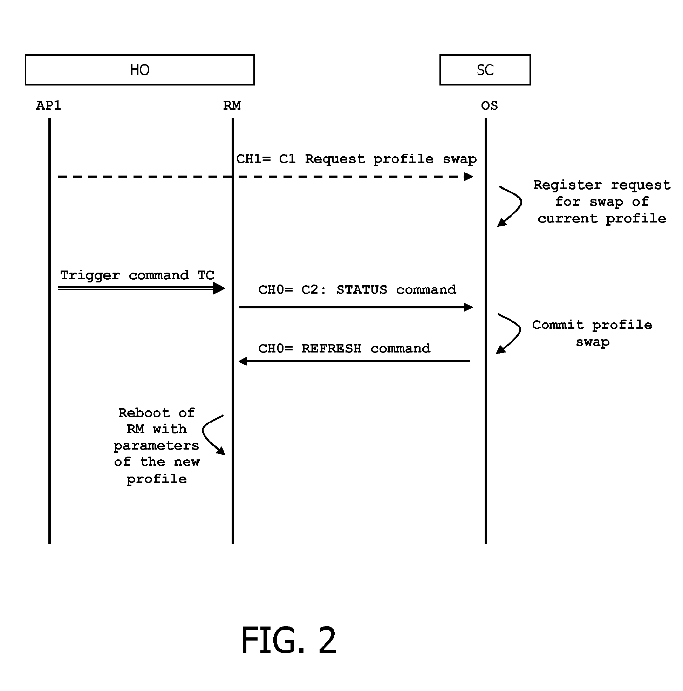

**Figure 2** shows the sequence allowing swapping the current virtual profile in a token SC according to the invention.

The token SC is connected to a host device HO which includes an application AP1 and a baseband. The baseband comprises a radio functions manager RM. First the application AP1 sends a request for swap of profile to the token SC via the logical channel number CH1. The token sets a flag to the newly selected profile and waits for a further command received through the logical channel number CH0.

Immediately after sending the request for swap of profile, the application AP1 sends a trigger command TC to the radio functions manager RM. The trigger command TC is designed to force the sending of a command C2 by the radio functions manager RM to the token SC via the logical channel number CH0.

Then the sequence continues as described in the example of Figure 1.

Advantageously, the command C2 may be a STATUS command as defined by ETSI TS 102 221. Alternatively, the command C2 may be any other command defined by the ETSI TS 102 221. For instance, the command C2 may be an Update Binary command or an Update Record targeting a file dedicated to this mechanism.

Advantageously, the trigger command TC may be an AT+CSIM command as defined by ESTI TS 127 007 and which contains a STATUS command.

Alternatively, the trigger command TC may be an AT+CRSM command as defined by ESTI TS 127 007 and which contains a STATUS command.

Alternatively, the trigger command TC may be an AT+CGLA command as defined by ESTI TS 127 007 which contains a STATUS command.

Alternatively, the trigger command TC may be an AT+CRLA command as defined by ESTI TS 127 007 which contains a STATUS command.

Alternatively, the trigger command TC may be sent using any API exposed to applications and services (running on top of the Application), allowing APDU exchanges with a UICC card.

Advantageously, the operating system OS of the token SC checks if a swap request is registered before sending the Refresh command. If no swap request has been registered, the token SC does not send any Refresh command.

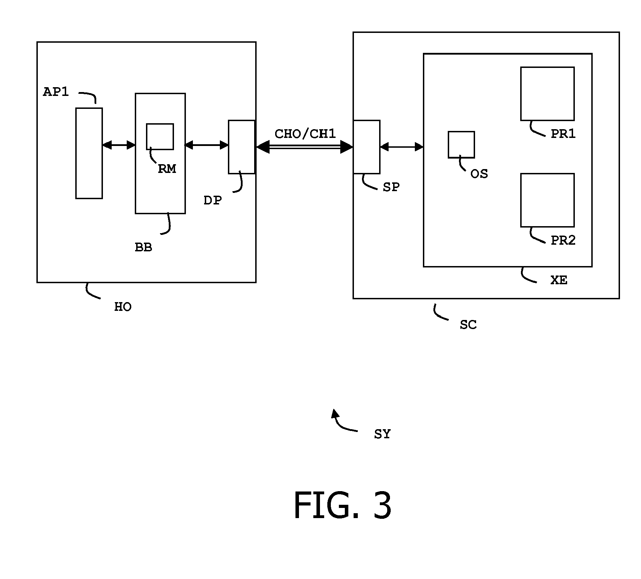

**Figure 3** shows a system SY comprising a host device HO and a token SC according to the invention.

In this example, the host device HO is a mobile phone having a single hardware communication interfaces DP for communicating with a token. The host device HO comprises a baseband BB which is designed to communicate with tokens of UICC type. The baseband BB comprises a radio functions manager RM able to manage the radio functions of the baseband and to use services provided by the token SC.

The host device HO comprises a software application AP1 configured to send a trigger command TC to the radio functions manager RM immediately after sending a swap request C1 to the token SC. The trigger command TC forces the sending of a command C2 by the baseband BB to the token SC through the logical channel which is used by the token to send CAT Refresh commands.

In the example of figure 3, the application AP1 is run in the execution environment of the host device HO.

Alternatively, the application AP1 may be embedded in the baseband BB and run into the baseband.

The token SC is an embedded UICC which comprises a physical communication interface SP and an execution environment XE. The execution environment XE comprises an operating system OS and two virtual profiles PR1 and PR2.

To avoid Deny of Service attack, by another application embedded in the host device leading to infinite Refresh sequence, the token SC may be configured to send a Refresh command only if an enable profile request (i.e. a request of profile swap) has been registered since the last Refresh sending.

For instance, the sequence may be as follow.
a) The token receives a profile swap request.
b) The token flags the profile to be enabled (i.e. to be activated) and registers a swap request.
c) The token receives a Status command from the baseband which has been triggered by the application AP1
d) The token checks if a swap request is registered. I not, the sequence stops. If yes, the token returns a 91 xx status word to the baseband. (as described in ETSI TS 102 223)
e) In response to the receipt of the 91 xx status word, the baseband sends a Fetch command to get the next proactive command.
f) The token sends the Refresh command and unregisters the swap request. Preferably, the Refresh command is set in "UICC Reset" mode as specified in § 6.4.7 of the ETSI TS 102 223 V7.6.0
g) In response to the Refresh command, the radio functions manager RM of the baseband starts a reboot phase

An advantage of the invention is to be fully compliant with existing Telecom standards.

An advantage of the invention is to be fully compliant with existing basebands.

Thanks to the invention, the duration required for activating a new virtual profile is independent of the polling frequency of the baseband.

It must be understood, within the scope of the invention, that the above-described embodiments are provided as non-limitative examples. In particular, the token may comprise any number of virtual profiles.

The architecture of the host device and the architecture of the token shown at Figure 3 are provided as examples only. These architectures may be different. For example, the baseband may comprise the application AP1.

The invention is not limited to a token of UICC type and may apply to any token able to act as a UICC.

The above described communication interfaces are physical interfaces which may work in either contact mode or in contactless mode.

## Claims

1. A **method** for managing the swap of current virtual profile in a token (SC) acting as an UICC, said token (SC) comprising a plurality of virtual profiles (PR1, PR2) and being connected to a host machine (HO) comprising an application (AP1) and a baseband (BB) which includes a radio functions manager (RM), said method comprising the step:
- sending a swap command (C1) requesting a swap of current virtual profile from the application (AP1) to the token (SC) through a first logical channel (CH1), **characterized in that** said method comprises the further step:
- sending a triggering command (TC) from the application (AP1) to the radio functions manager (RM) immediately after sending the swap command (C1), the triggering command (TC) forcing sending of a first command (C2) by the baseband (BB) to the token (SC) through a second logical channel (CH0) different from said first logical channel (CH1).

2. A method according to claim 1, wherein the first command (C2) is the STATUS command as defined by ETSI TS 102 221

3. A method according to claim 1, wherein the triggering command (TC) is an AT+CSIM command or an AT+CRSM command as defined by ESTI TS 127 007 which contains a STATUS command as defined by ETSI TS 102 221.

4. A method according to claim 1, wherein the triggering command (TC) is an AT+CGLA command or an AT+CRLA command as defined by ESTI TS 127 007 which contains a STATUS command as defined by ETSI TS 102 221.

5. A method according to claim 1, wherein the token (SC) registers a request for profile swap in response to receiving the swap command (C1) and wherein the token (SC) sends a CAT REFRESH command through said second logical channel (CH0) in response to receiving the first command (C2) only if a request for profile swap is currently registered.

6. A **terminal equipment** (HO) comprising an application (AP1) and a baseband (BB) which includes a radio functions manager (RM), said terminal equipment (HO) being configured to connect a token (SC) acting as an UICC and comprising a plurality of virtual profiles (PR1, PR2), said application (AP1) being able to send a swap command (C1) requesting a swap of current virtual profile to the token (SC) through a first logical channel (CH1),
**characterized in that** said application (AP1) is configured to send a triggering command (TC) to the radio functions manager (RM) immediately after sending the swap command (C1), the triggering command (TC) forcing sending of a first command (C2) by the baseband (BB) to the token (SC) through a second logical channel (CH0) different from said first logical channel (CH1).

7. A terminal equipment (HO) according to claim 6, wherein the first command (C2) is the STATUS command as defined by TS 102 221.

8. A terminal equipment (HO) according to claim 6, wherein the triggering command (TC) is an AT+CSIM command or an AT+CRSM command as defined by ESTI TS 127 007 which contains a STATUS command as defined by ETSI TS 102 221.

9. A terminal equipment (HO) according to claim 6, wherein the triggering command (TC) is an AT+CGLA command or an AT+CRLA command as defined by as defined by ESTI TS 127 007 which contains a STATUS command as defined by ETSI TS 102 221.

10. A **system** (SY) comprising a terminal equipment (HO) according to claim 6 and an token (SC) including an operating system (OS) configured to register a request for profile swap in response to receiving the swap command, wherein the operating system (OS) is configured to send a CAT REFRESH command through said second logical channel (CH0) in response to receiving the first command (C2) only if a request for profile swap is currently registered.
